# FASCICULE DE BREVET EUROPEEN

(11) **EP 0 404 649 B1**
(45) Date de publication et mention de la délivrance du brevet: **30.08.1995**
(21) Numéro de dépôt: 90401693.8
(22) Date de dépôt: 15.06.1990
(51) Int. Cl.: G06F 7/00, G06F 7/02, B60R 16/02

(54) **Dispositif de génération d'un signal de masquage d'un bit lors d'une comparaison dynamique d'une trame de données en série, avec une consigne**
Verfahren zum Erzeugen eines Maskierungsbits während eines dynamischen Vergleichs eines seriellen Datenstroms mit einer Referenz
Device for generating a bit-masking signal during dynamic comparison of a serial data stream with a reference

(30) Priorité: 23.06.1989 FR 8908409
(43) Date de publication de la demande: 27.12.1990
(73) Titulaire: AUTOMOBILES PEUGEOT, 75116 Paris (FR); AUTOMOBILES CITROEN, 92200 Neuilly-sur-Seine (FR)
(72) Inventeur: Malville, Joel, F-60230 Chambly (FR); Herbault, Patrick, F-75016 Paris (FR); Abou, Bruno, F-75014 Paris (FR)
(74) Mandataire: Obolensky, Michel

(56) Documents cités:
- DE-A- 2 233 164
- US-A- 3 784 980
- PATENT ABSTRACTS OF JAPAN, vol. 7, no. 14 (P-205)[1287], 22 janvier 1983; & JP-A-58 56 027 (FUJITSU K.K.) 02-04-1983
- IBM TECHNICAL DISCLOSURE BULLETIN, vol. 23, no. 5, October 1980, pages 2032-2033, New York, US; H.M. BUETTNER et al.: "Comparison circuit"

## Description

La présente invention concerne un dispositif de génération d'un signal de masquage d'un bit lors d'une comparaison dynamique d'une trame de données en série, émise sur un réseau de transmission de données, notamment de véhicule automobile, avec une consigne.

On connaît du document JP-A-58 56 027, un dispositif de génération d'un signal de masquage lors d'une comparaison de deux signaux dans une opération conditionnelle, un signal de masquage permettant de commander la suppression d'un signal de comparaison à la sortie de portes.

On connaît également du document DE-A-2 233 164, un dispositif de comparaison d'une trame de données en série avec une consigne comportant un comparateur, un générateur de signaux de commande et un convertisseur parallèle-série.

Lorsque dans un réseau de communication, notamment de véhicule automobile, différentes stations réalisent des transmissions de données à destination d'autres stations, chacune d'elles doit analyser le champ d'adresse appartenant à la trame reçue, afin de déterminer si elle en est le destinataire ou non.

Il peut être nécessaire, pour le traitement interne des données reçues, de connaitre l'état de légalité entre l'adresse reçue et ladresse locale, bien que la totalité du champ d'adresse ne soit pas encore transmise.

Le champ d'adresse pouvant contenir des bits non attribués, ou des bits de contrôle non significatifs lors de la reconnaissance de l'adresse, il s'avère nécessaire d'être en mesure de masquer un bit quelconque de la trame reçue lors de l'analyse de celle-ci.

Le but de 1 invention est donc de proposer un dispositif de génération d'un signal de masquage d'un bit pour un dispositif de comparaison dynamique, bit à bit, d'une trame de données reçues sous forme sérielle, avec une consigne sérialisée en synchronisme avec la réception de cette trame.

Ceci permet d'obtenir en temps réel le résultat de la comparaison de chaque bit de la trame avec la consigne, et le résultat de la comparaison des n bits déjà traités.

De plus, ce dispositif permet de masquer trés simplement un bit quelconque de la trame reçue, afin d'inhiber la comparaison de celui-ci.

A cet effet, l'invention a pour objet un dispositif de génération d'un signal de masquage comme défini dans la revendication 1.

Avantageusement, le générateur de consigne programmable comporte des résistances dont chacune reçoit sur une borne le signal variable et dont l'autre borne est reliée à l'une des lignes de consigne initiale correspondant à un bit à traiter, et en ce que les lignes de consigne initiale correspondant à un bit à masquer ne sont pas reliées au convertisseur, afin d'inhiber la comparaison de ceux-ci.

L'invention sera mieux comprise à l'aide de la description qui va suivre, donnée uniquement à titre d'exemple et faite en se référant aux dessins annexés, sur lesquels :
- la Fig. 1 représente un schéma synoptique illustrant le principe de fonctionnement d'un dispositif de comparaison d'une trame de données en série avec une consigne;
- les Fig.2,3 et 4 représentent trois modes de réalisation de dispositifs de comparaison comportant des moyens d'inhibition de la comparaison d'un bit;
- la Fig.5 représente un schéma synoptique d'un dispositif de sérialisation de données de l'état de la technique;
- la Fig.6 représente un schéma synoptique d'un dispositif de génération d'un signal d'inhibition du traitement d'un bit, de l'état de la technique;
- la Fig.7 représente un schéma synoptique d'un dispositif de génération d'un signal d'inhibition du traitement d'un bit, selon l'invention; et
- la Fig.8 représente un schéma de câblage d'une partie du dispositif représenté sur la Fig.7.

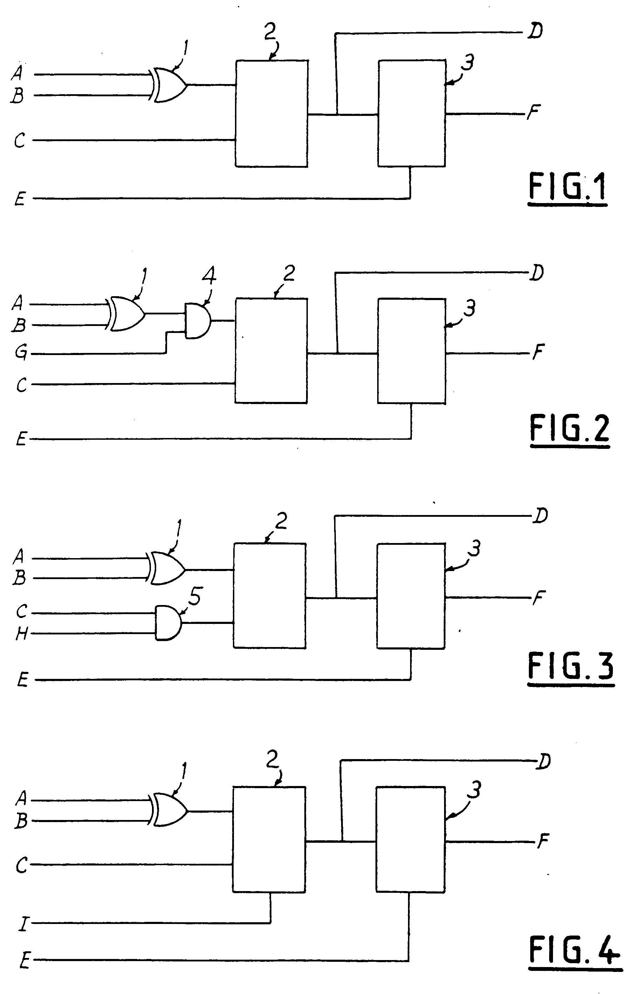

Ainsi qu'on peut le voir sur la Fig. 1, qui représente un schéma synoptique d'un dispositif de comparaison, celui-ci comporte une porte OU-exclusif 1 dont une entrée reçoit un signal A constitué par une trame de données en série, émise par exemple par une station, sur un réseau de transmission de données, notamment de véhicule automobile. Sur une autre entrée, cette porte OU-exclusif 1 reçoit un signal B constitué par une consigne sous forme sérielle, la trame de données A reçue par la station étant à comparer avec cette consigne, comme expliqué précédemment.

A cet effet, cette porte OU-exclusif réalise une comparaison bit à bit de la trame de données et de la consigne et la sortie de cette porte OU-exclusif est reliée à des moyens d'échantillonnage-blocage 2 du signal de sortie de cette porte.

En effet, ces moyens d'échantillonnage-blocage 2 reçoivent le résultat de la comparaison présent à la sortie de la porte OU-exclusif 1, l'échantillonnent au rythme d'un signal d échantillonnage C et mémorisent la valeur obtenue jusqu'au prochain signal d'échantillonnage.

Le résultat du traitement d'un bit est présent à tout moment à la sortie de ces moyens d'échantillonnage-blocage, ce signal étant référencé LD sur cette figure.

Le dispositif comporte également des moyens de stockage d'erreurs de comparaison 3 connectés à la sortie des moyens d'échantillonnage-blocage 2 et recevant un signal de réinitialisation avant chaque comparaison, ce signal étant référencé par E sur cette figure.

La sortie F de ces moyens de stockage délivre un signal représentatif des erreurs de comparaison pour les n bits déjà traités.

Ainsi qu'on l'a mentionné précedemment, il s'avère nécessaire dans certains cas, de masquer un bit quelconque d'une trame reçue, lors de l'analyse de celle-ci.

Cette opération peut être réalisée de différentes manières.

Ainsi par exemple, on peut réaliser cette opération en effectuant une égalité artificielle du bit concerné appartenant à la trame à analyser, avec le bit correspondant de la consigne.

Un dispositif mettant en oeuvre ce procédé est représenté sur la Fig.2.

Le dispositif représenté sur cette figure, comporte les éléments 1, 2 et 3 décrits en regard de la Fig. 1.

De plus, une porte ET 4 est interposée entre la sortie de la porte OU-exclusif 1 et l'entrée des moyens d'échantillonnage-blocage 2. Cette porte reçoit donc sur une entrée, le signal de sortie de la porte OU-exclusif 1 et sur une autre entrée, un signal de masquage G permettant de réaliser l'égalité artificielle du bit en cours de traitement avec le bit de la consigne correspondant. Ceci permet d'inhiber la comparaison de ce bit.

Cependant, l'inhibition peut également être réalisée par la suppression du signal d'échantillonnage présenté aux moyens d'échantillonnage-blocage 2, comme cela est représenté sur la Fig.3. Le dispositif représenté sur cette figure comporte toujours les éléments 1,2 et 3 mentionnés précédemment et une porte ET, 5, recevant sur une entrée le signal d'échantillonnage C et sur une autre entrée, un signal de commande de masquage H.

La sortie de cette porte ET 5 est reliée à l'entrée d'échantillonnage des moyens d'échantillonnage-blocage 2. Le signal de commande de masquage H permet de commander la suppression du signal d'échantillonnage à la sortie de cette porte 5 et donc à l'entrée des moyens d'échantillonnage-blocage, pour inhiber la comparaison du bit.

Le masquage peut également être obtenu en agissant directement sur ces moyens d'échantillonnage-blocage 2, comme cela est représenté sur la Fig .4.

Le dispositif représenté sur cette figure comporte les éléments 1,2 et 3 mentionnés précédemment. Les moyens d'échantillonnage-blocage recoivent un signal de commande de masquage 1 permettant de forcer le signal de sortie de ces moyens d'échantillonnage-blocage 2 dans un état déterminé lors de la comparaison d'un bit, jusqu'au prochain bit à traiter, pour inhiber la comparaison du bit en cours.

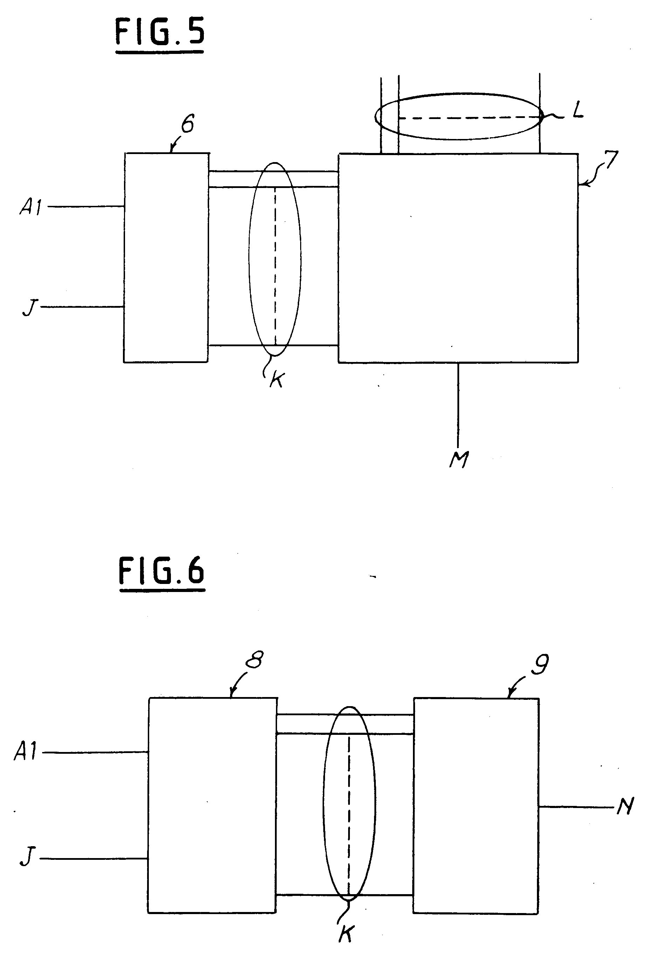

La Fig.5 représente un dispositif de l'état de la technique permettant d'émettre des données d'une trame, en série, lorsqu'il est nécessaire de connaître le numéro du bit en cours de traitement.

Ce dispositif comporte un générateur de signaux de commande 6 assurant la fonction de comptage des bits traités. Ce générateur reçoit en entrée un signal d'horloge A1 dont le front actif est synchrone du début des bits constituant la trame à analyser. Ce signal constitue une horloge communément appelée "horloge bit".

Ce générateur reçoit également en entrée un signal J d'initialisation de l'état du groupe de sorties K de ce générateur. Le numéro du bit en cours de traitement est visualisé sur le groupe de sorties K.

Ce générateur possède P sorties avec 2^{P} supérieur ou égal au nombre de bits constituant la trame à analyser.

Ces sorties du générateur de signaux de commande sont reliées à des entrées d'un convertisseur parallèle-série 7 recevant en entrée une consigne L sous forme parallèle.

Ce convertisseur parallèle-série 7 présente à sa sortie c'est à dire en M, un signal appartenant au groupe de signaux de la consigne L, dont le rang est désigné par les signaux K présents à son entrée et engendrés par le générateur 6.

Il existe plusieurs procédés de constitution d'un signal d'inhibition du traitement d'un bit. On décrira ci-après le procédé le plus communément utilisé dans l'état de la technique, en regard de la Fig.6. Le signal d'inhibition du traitement pour un n^{ième} bit de la trame à traiter, est obtenu par décodage du n^{ième} état du compteur cadençant la sérialisation de la consigne et dont le fonctionnement a été décrit précédemment.

Sur la Fig.6, est représenté un schéma synoptique d'un dispositif de constitution d'un signal d'inhibition de l'état de la technique. Ce dispositif comporte un générateur de signaux de commande 8 analogue au générateur 6 décrit en regard de la Fig.5 et recevant en entrée les signaux A1 et J. Les signaux de sortie K de celui-ci sont connectés aux entrées d un générateur 9 d un signal d'inhibition du traitement d'un bit, ce signal étant présent à la sortie N de ce générateur.

Ainsi le générateur 8 assure le comptage des bits traités. Le numéro du bit en cours de traitement est visualisé sur le groupe de sorties K et le générateur 9 recevant en entrée les signaux K, engendre à sa sortie un signal N indiquant qu'il y a lieu d'inhiber, lorsque celui-ci est actif, le traitement du bit en cours. Ceci est réalisé lorsqu'une identité est détectée entre la valeur binaire associée au groupe de signaux K et le numéro du bit, appartenant à la trame analysée, ne devant pas être traité.

Cependant, le nombre de portes logiques utilisées pour la constitution du générateur 9, croît très rapidement lorsque plus d'un bit est concerné. De plus, la complexité du dispositif augmente considérablement si on veut avoir la possibilité de programmer à tout moment le numéro du ou des bits à ne pas traiter.

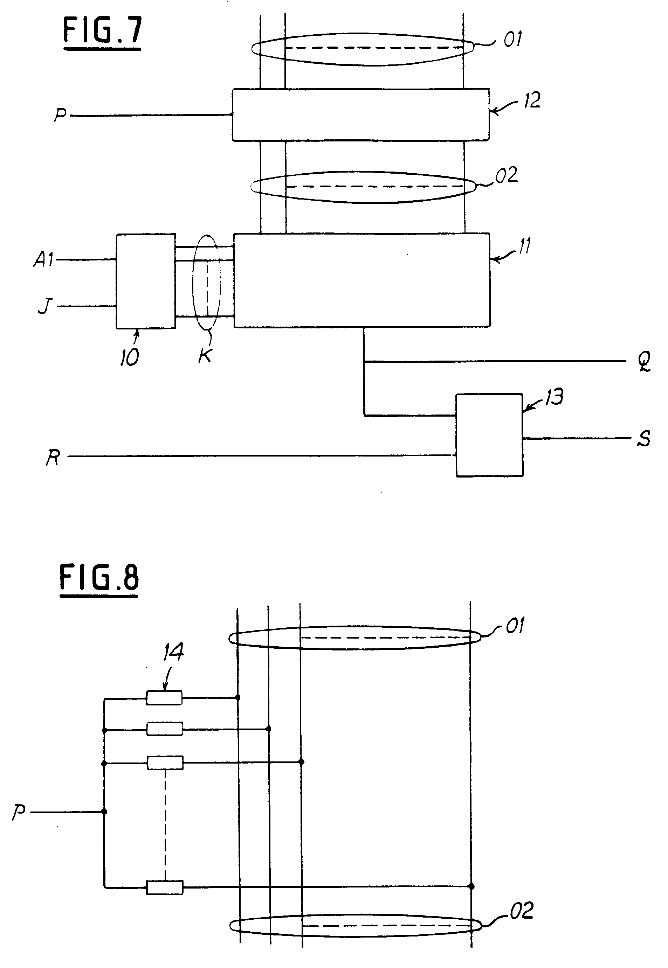

Afin de palier ces inconvénients, une autre solution peut être utilisée, comme celle représentée sur la Fig.7.

Le dispositif selon l'invention représenté sur cette figure, comporte un générateur 10 analogue au générateur 8 décrit en regard de la Fig.6. Ce générateur 10 reçoit en entrée le signal A1 et le signal J et présente à sa sortie le groupe de signaux K. Ce groupe de signaux est reliée à l'entrée d'un convertisseur parallèle-série 11 qui sera décrit plus en détail par la suite.

Le dispositif selon l'invention représenté sur cette figure comporte également un générateur de consigne programmable 12 recevant en entrée une consigne initiale 01 et un signal P de niveau variable en fonction du temps dont la fréquence est supérieure à la fréquence du signal A1 dit d'"horloge bit".

Ce générateur de consigne programmable 12 est adapté pour présenter à sa sortie une consigne 02 programmée en fonction des masquages de bits souhaités, cette consigne 02 étant appliquée à des entrées du convertisseur 11 mentionné précédemment.

Cette consigne 02 comporte autant de signaux qu'il y a de bits appartenant à la trame à traiter. Chacun des signaux appartenant à cette consigne, a une valeur égale à celle du signal de même rang appartenant à la consigne 01 si le bit associé appartenant à la trame analysée, doit être traité. Dans le cas contraire, cette valeur est égale à la valeur du signal variable P. Le signal Q à la sortie du convertisseur 11, représentatif du bit sélectionné de la consigne 02, a donc pour chaque bit trois états possibles, à savoir un état logique 0, un état logique 1 ou variable en fonction du temps.

Le dispositif représenté sur cette Fig.7 comporte également des moyens 13 de détection d'une transition du signal de sortie du convertisseur 11 et reçoivent donc ce signal sur une entrée et un signal de réinitialisation R à chaque nouveau bit, sur une autre entrée.

Ces moyens 13 mémorisent toute transition du signal de sortie Q du convertisseur durant l'analyse d'un bit. Si une transition est détectée, le signal S de sortie de ces moyens 13 est rendu actif et utilisé pour l'inhibition du traitement du bit concerné comme cela a été décrit précédemment.

Le nombre de composants pour la réalisation de ce dispositif n'est pas fonction du nombre de bits non traités.

Si la consigne est accessible à un utilisateur, il suffit pour adapter le dispositif aux souhaits de l'utilisateur, d'utiliser un dispositif tel que celui décrit en regard de la Fig.8, qui représente un exemple de réalisation d'un générateur de consigne programmable 12.

Sur cette figure, on constate que chaque ligne de bit de consigne est connectée à une borne d'un élément résistif, par exemple 14, dont l'autre borne reçoit le signal P variable en fonction du temps.

Si l'on souhaite inhiber la comparaison d'un bit, il suffit de ne pas connecter la ligne de la consigne 01, associée au bit ne devant pas être traité.

Ce dispositif permet de s'affranchir des problèmes de mauvaise connexion pouvant entraîner des fonctionnements aléatoires suivant la technologie utilisée pour la réalisation de ce dispositif et des perturbations de l'environnement.

Si la consigne n'est pas accessible, ou n'est pas sujette à des modifications, il suffit pour les bits non traités, d'appliquer directement le signal P aux entrées concernées du convertisseur 11 sans utiliser d'éléments résistifs.

## Revendications

1. Dispositif de génération d'un signal de masquage (S) lors d'une comparaison dynamique bit par bit d'un ou de plusieurs champs composant une trame de données (A) en série, émise sur un réseau de transmission de données, notamment de véhicule automobile, avec une consigne ayant le même nombre de bits que le ou les champs de la trame de données concernés par la comparaison, le signal de masquage (S) étant utilisé pour inhiber la comparaison d'au moins un des bits de la trame de données, ce dispositif comportant un générateur de signaux de commande (10) recevant en entrée, un signal d'horloge (A1) dont le front actif est synchrone avec les bits de la trame de données (A), et un signal de réinitialisation (J) avant chaque comparaison et dont les signaux de sortie (K) qui désignent le rang du bit en cours de traitement, sont reliés à un convertisseur parallèle-série (11), caractérisé en ce que le convertisseur parallèle-série (11) reçoit en entrée une consigne programmée (02) sous forme parallèle à partir d'un générateur de consigne programmable (12) recevant en entrée une consigne initiale (01) de même nombre de bits que la consigne programmée (02) et un signal (P) variable en fonction du temps et de fréquence supérieure à la fréquence du signal d'horloge (A1), ce générateur de consigne programmable étant adapté pour délivrer la consigne programmée (02) dont chacun des bits prend l'état soit du bit respectif de la consigne initiale (01) lorsqu'il correspond au rang d'un bit faisant l'objet d'une comparaison, ou soit l'état du signal variable lorsqu'il correspond au rang d'un bit à masquer afin d'inhiber sa comparaison, la sortie du convertisseur parallèle-série (11) délivrant un signal de sortie (Q) de même rang que le bit à comparer de la trame de données (A) et étant reliée à l'entrée de moyens de détection (13) de transition du signal de sortie du convertisseur (11), les moyens de détection étant adaptés pour délivrer durant la comparaison du bit le signal de en réponse à la détection d'une transition dans ledit signal de sortie.

2. Dispositif selon la revendication 1, caractérisé en ce que le générateur de consigne programmable (12) comporte des résistances (14) dont chacune reçoit sur une borne le signal variable (P) et dont l'autre borne est reliée à l'une des lignes de consigne initiale correspondant à un bit à traiter, et en ce que les lignes de consigne initiale correspondant à un bit à masquer ne sont pas reliées au convertisseur (12), afin d'inhiber la comparaison de ceux-ci.

3. Dispositif selon la revendication 1, caractérisé en ce que le signal variable (P) est appliqué directement aux entrées du convertisseur parallèle-série (11) correspondant à l'au moins un des bits à masquer afin d'inhiber la comparaison de ceux-ci.

## Patentansprüche

1. Vorrichtung zur Erzeugung eines Maskierungssignales (S) während eines dynamischen Bit-Bit-Vergleiches von einem oder einer Vielzahl von Feldern, die ein serielles Datenraster (A) bilden, welches an ein Datenübertragungsnetz, insbesondere eines Kraftfahrzeuges, abgegeben wird, mit einer Einstellgröße, die die gleiche Bit-Zahl wie das oder die Felder des von dem Vergleich betroffenen Datenrasters besitzt, wobei das Maskierungssignal (S) dazu verwendet wird, um den Vergleich von mindestens einem der Bits des Datenrasters zu verhindern und die Vorrichtung einen Befehlssignalgeber (10) aufweist, der an seinem Eingang ein Taktsignal (A1), dessen aktive Front mit den Bits des Datenrasters (A) synchron ist, und ein Reinitialisierungssignal (J) vor jedem Vergleich empfängt und dessen Ausgangssignale (K), die den Bit-Rang während der Behandlung festlegen, an einem Parallel-Reihen-Umsetzer (11) anliegen, dadurch gekennzeichnet, daß der Parallel-Reihen-Umsetzer (11) an seinem Eingang eine programmierte Einstellgröße (02) in Parallelform von einem Geber (12) für programmierbare Einstellgrößen empfängt, welcher an seinem Eingang eine Anfangsgröße (01) der gleichen Bit-Zahl wie die programmierte Einstellgröße (02) und ein veränderliches, von der Zeit und einer höheren Frequenz als die Frequenz des Taktsignales (A1) abhängiges Signal (P) empfängt und die programmierte Einstellgröße (02) abgeben kann, von der jedes Bit den Zustand des entsprechenden Bits der Anfangsgröße (01), wenn es im Rang einem den Gegenstand eines Vergleiches bildenden Bit enspricht, oder den Zustand des veränderlichen Signales annimmt, wenn es im Rang einem zu maskierenden Bit entspricht, um dessen Vergleich zu verhindern, wobei der Ausgang des Parallel-Reihen-Umsetzers (11) ein Ausgangssignal (Q) mit dem gleichen Rang wie das zu vergleichende Bit des Datenrasters (A) abgibt und an den Eingang von Detektionseinrichtungen (13) für den Übergang des Ausgangssignales des Umsetzers (11) angeschlossen ist und wobei die Detektionseinrichtungen während des Bitvergleiches das Maskierungssignal in Abhängigkeit von der Detektion eines Überganges im Ausgangssignal abgeben können.

2. Vorrichtung nach Anspruch 1, dadurch gekennzeichnet, daß der Geber (12) für die programmierbare Einstellgröße Widerstände (14) aufweist, von denen jeder an einer Klemme das veränderliche Signal (P) empfängt und deren andere Klemme an eine der Leitungen der einem zu behandelnden Bit entsprechenden Anfangsgröße angeschlossen ist, und daß die Leitungen der einem zu maskierenden Bit entsprechenden Anfangsgröße nicht an den Umsetzer (12) angeschlossen sind, um den Vergleich desselben zu verhindern.

3. Vorrichtung nach Anspruch 1, dadurch gekennzeichnet, daß das veränderliche Signal (P) direkt an die Eingänge des Parallel-Serien-Umsetzers (11) angeschlossen ist, die dem mindestens einen zu maskierenden Bit entsprechen, um einen Vergleich desselben zu verhindern.

## Claims

1. Device for generating a masking signal (S) during a bitwise dynamic comparison of one or more fields forming a serial data packet (A), emitted on a data transmission network, particularly of a motor vehicle, with a reference having the same number of bits as the field or fields of the data packet to which the comparison applies, the masking signal (S) being used for inhibiting the comparison of at least one of the bits of the data packet, said device incorporating a control signal generator (10) receiving at the input a clock signal (A1), whose active front is synchronous with the bits of the data packet (A), and a reinitialization signal (J) prior to each comparison and whose output signals (K) designating the order of the bit being processed are connected to a dynamicizer (11), characterized in that the dynamicizer (11) receives at the input a reference (02) programmed in parallel form from a programmable reference generator (12) receiving at the input an initial reference (01) of the same number of bits as the programmed reference (02) and a signal (P) variable as a function of time and having a frequency above the frequency of the clock signal (A1), said programmable reference generator being adapted to supply the programmed reference (02), whereof each of the bits assumes the state either of the respective bit of the initial reference (01) when it corresponds to the order of a bit forming the object of a comparison, or the state of the variable signal when it corresponds to the order of a bit to be masked in order to inhibit its comparison, the output of the dynamicizer (11) supplying an output signal (Q) of the same order as the bit to be compared of the data packet (A) and being connected to the input of means (13) for detecting the transition of the output signal of the converter (11), the detection means being adapted to supply during the comparison of the bit the masking signal in response to the detection of a transition in said output signal.

2. Device according to claim 1, characterized in that the programmable reference generator (12) has resistors (14), each of which receives on one terminal the variable signal (P) and whereof the other terminal is connected to one of the initial reference lines corresponding to a bit to be processed and in that the initial reference lines corresponding to a bit to be masked are not connected to the dynamicizer (11) in order to inhibit the comparison thereof.

3. Device according to claim 1, characterized in that the variable signal (P) is directly applied to the inputs of the dynamicizer (11) corresponding to at least one of the bits to be masked in order to inhibit the comparison thereof.
